# EUROPÄISCHE PATENTSCHRIFT

(11) **EP 0 287 864 B1**
(45) Veröffentlichungstag und Bekanntmachung des Hinweises auf die Patenterteilung: **07.01.1993**
(21) Anmeldenummer: 88105132.0
(22) Anmeldetag: 30.03.1988
(51) Int. Cl.: G01P 13/00

(54) **Bewegungssensor**
Movement detector
Détecteur de mouvement

(30) Priorität: 22.04.1987 DE 3713416
(43) Veröffentlichungstag der Anmeldung: 26.10.1988
(73) Patentinhaber: Stobbe, Anatoli, D-30457 Hannover (DE)
(72) Erfinder: Stobbe, Anatoli, D-3000 Hannover (DE); Herrmann, Willi, D-3007 Gehrden (DE)
(74) Vertreter: Thömen, Uwe, Dipl.-Ing.

(56) Entgegenhaltungen:
- EP-A- 0 254 945
- FR-A- 2 481 457
- US-A- 4 719 419

## Beschreibung

Die Erfindung betrifft einen Bewegungssensor gemäß dem Oberbegriff des Anspruchs 1.

In der Praxis finden Bewegungssensoren dieser Gattung ihre Anwendung vor allem beim Personenschutz von Wachpersonal. Daneben können solche Bewegungssensoren aber auch als Alarmanlagen bzw. Einbruchssicherung in Gebäuden eingesetzt werden.

Den möglichen Anwendungsfällen eines Bewegungssensors ist jeweils gemeinsam, daß dieser Signale erzeugt und abgibt, wenn eine Bewegung auf den Bewegungssensor einwirkt, wenn also die Ruhelage verlassen wird.

Beim Gebäudeschutz ist heute das Überwachungspersonal vorwiegend mit Sendern für die drahtlose Übertragung von Signalen ausgerüstet, und es ist üblich, einen Bewegungssensor am Sender zu befestigen. Solange sich die Person in Bewegung befindet, werden von dem Bewegungssensor Signale erzeugt. Wenn demgegenüber der Bewegungssensor keine Signale abgibt, kann dies auf einen Alarmfall hindeuten, beispielsweise wenn die Person bewußtlos auf dem Boden liegt. Für diesen Fall ist dann die Aussendung eines Notrufes über den Sender vorgesehen.

Umgekehrt wird bei der Anwendung eines Bewegungssensors im Sinne einer Einbruchssicherung dann ein Signal erzeugt und ausgesendet werden, wenn ein Einbrecher in einen Raum eindringt und der Bewegungssensor eine Bewegung registriert.

Aus den voranstehend beispielshaft geschilderten Anwendungsfällen ergibt sich ohne weiteres die erhebliche Bedeutung, die den Bewegungssensor zukommt. Gleichwohl sind die bisher bekannten Bewegungssensoren noch mit gravierenden Nachteilen behaftet.

Die Signalerzeugung bei den bekannten Bewegungssensoren erfolgt dadurch, daß bei Auftreten einer Bewegung mechanische Kontakte durch mechanische Krafteinwirkung geschlossen werden, um so ein Signal zu erzeugen. Hierbei ist jedoch nachteilig, daß die Ansprechempfindlichkeit relativ hoch liegt, da für die Signalerzeugung bzw. für das Schließen des elektrischen Kontaktes eine mechanische Kraft aufgebracht werden muß. Außerdem arbeiten solche Bewegungssensoren aufgrund der anfälligen Mechanik in der Praxis nicht immer zuverlässig.

Aus der älteren, nicht vorveröffentlichten EP 02 54 945 A1 ist ein Sensor zum Erfassen der Trägheits- und /oder Rotationsbewegungen eines Gegenstandes oder Lebewesens bekannt. Der Sensor besteht aus einem Hohlkörper, in dem mindestens ein Körper frei bewegbar eingeschlossen ist. Ein Übertrager erfaßt die Relativbewegungen zwischen Hohlkörper und Körper und wandelt sie in ein elektrisches Signal um, das der Bewegung proportional ist.

Weiterhin ist aus der FR 2 481 457 eine Meßeinrichtung für die Verzögerung eines Fahrzeuges bekannt, bei welcher sich zwischen zwei Magneten, deren gleichnamige Pole einander entgegengerichtet sind, ein als Detektor wirkendes Hallelement befindet. Der eine der Magnete ist als bewegbarer Körper ausgebildet und an einer Masse befestigt, die wiederum an einer Blattfeder gelagert ist. Bei starker Verzögerung des Fahrzeugs schwenkt die Masse unter Biegen der Blattfeder aus, wobei sich der an der Masse befestigte Magnet um so stärker dem Hallelement annähert, je größer die Verzögerung ist. Durch die Lagerung über eine Blattfeder ergibt sich eine sehr geringe Empfindlichkeit der bekannten Meßeinrichtung. Weiterhin ist der bewegbare Körper durch einen Magneten selbst gebildet, der einen planen Pol aufweist.

Der Erfindung liegt die Aufgabe zugrunde, einen Bewegungssensor gemäß dem Oberbegriff des Patentanspruchs 1 derart auszubilden, daß bei einfachem und kleinvolumigem Aufbau eine hohe Ansprechempfindlichkeit und Zuverlässigkeit gewährleistet ist.

Dieses Ziel erreicht die Erfindung bei dem im Oberbegriff des Patentanspruchs 1 genannten Bewegungssensor durch die Merkmale des kennzeichnenden Teils des Anspruchs 1.

Unter Berücksichtigung des Gedankens, die Änderung von Kraftlinien eines Magnetfeldes bei auf den Bewegungssensor einwirkender Bewegung für die Erzeugung von Signalen auszunutzen sowie unter Verwendung einer aus einem magnetisierbaren Material bestehenden Kugel als bewegbar gelagerter Körper wird mit dem erfindungsgemäßen Bewegungssensor eine extrem hohe Empfindlichkeit erzielt. Schon kleinste Erschütterungen des Bewegungssensors genügen zum Ansprechen, denn die starke Konzentration der magnetischen Kraftlinien beim Eintritt in die Kugel in dem jeweils dem Magneten zugewandten Bereich der Kugeloberfläche bewirkt, daß schon geringfügige Lageveränderungen der Kugel zu einer Lageveränderung des inhomogenen Feldes führen und zur Erzeugung eines Ausgangssignals ausreichend sind.

Da nur ein Magnet verwendet wird und die Kugel aus magnetisierbarem Material besteht, sind die Feldkräfte geringer als bei Anordnung von zwei Magneten. Diese geringen Feldkräfte beeinflussen die Beweglichkeit der Kugel nur umwesentlich, so daß auch kleine Bewegungen bereits eine Verlagerung der Kugel hervorrufen und ein Ausgangssignal des Hallelementes bewirken können.

Die Verwendung eines Hallelements ermöglicht einen sehr kleinen Aufbau des kompletten Bewegungssensors, der sich somit durch einen extrem geringen Platzbedarf auszeichnet und auch nachträglich an einen Sender oder dergleichen angebracht werden kann.

In der Praxis lassen sich für den Bewegungssensor mit dem umgebenden Gehäuse Abmessungen von etwa 10 mm x 8 mm erreichen.

In einer weiteren bevorzugten Ausführungsform der Erfindung ist die Kugel innerhalb des Gehäuses über ein Pendel an einen Haken im geringen Abstand oberhalb des Hallelementes aufgehängt. Hier läßt sich die Ansprechempfindlichkeit zusätzlich noch durch Variation des Abstandes der Kugel von dem Hallelement verändern, und außerdem bewirkt die pendelförmige Aufhängung der Kugel eine sehr hohe Empfindlichkeit.

Weitere vorteilhafte Ausgestaltungen der Erfindung sind in den Unteransprüchen angegeben und der nachfolgenden Beschreibung sowie der Zeichnung zu entnehmen.

Zum besseren Verständnis wird die Erfindung nachfolgend anhand der in der Zeichnung dargestellten Ausführungsbeispiele näher erläutert. Es zeigen:
- Fig. 1: eine schematische Ansicht eines ersten Bewegungssensors,
- Fig. 2: eine schematische Ansicht eines zweiten Bewegungssensors,
- Fig. 3: ein Prinzipschaltbild einer den Bewegungssensor nachgeschalteten Schaltungsanordnung, und
- Fig. 4: eine graphische Darstellung von Signalen und Zeitstufen.

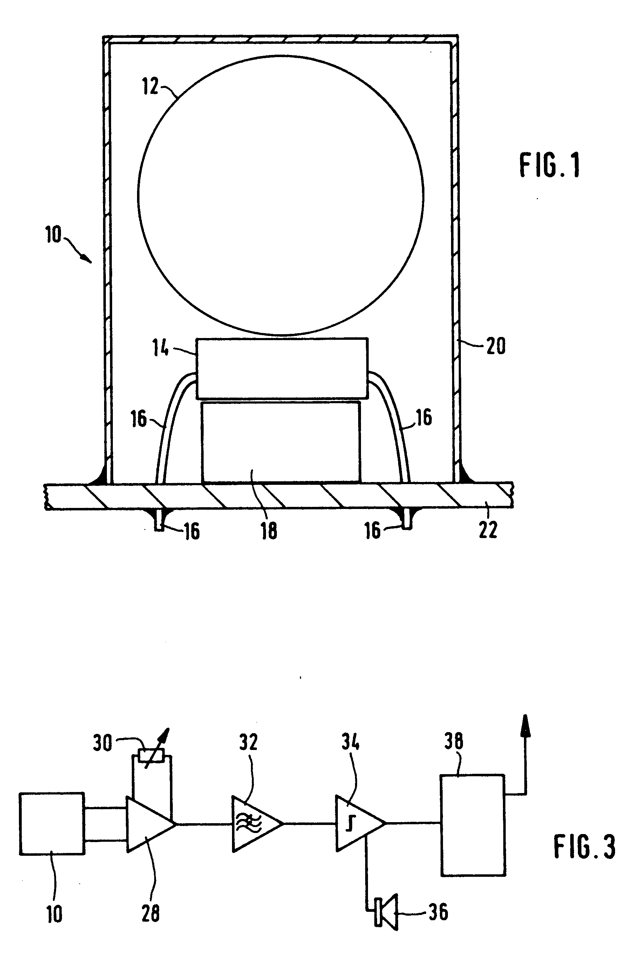

Der Bewegungssensor 10 gemäß der ersten Ausführungsform in Fig. 1 umfaßt ein geschlossenes Gehäuse 20, welches unten durch eine Platine 22 abgeschlossen ist. Auf der Platine 22 ist mittels nach außen führender Anschlüsse 16 ein Hallelement 14 befestigt, und unterhalb des Hallelements 14 befindet sich auf der Platine 22 ein Magnet 18.

Ferner befindet sich innerhalb des Gehäuses 20 eine bewegbar gelagerte Kugel 12, aus einem magnetischem Material. Zwischen dem Magnet 18 und der Kugel 20 bilden sich magnetische Kraftlinien aus, die durch das Hallelement 16 hindurch verlaufen und sich sowohl innerhalb des Gehäuses 20 als auch außerhalb des Gehäuses 20 schließen.

Solange die Kugel 12 in einer Ruhelage verbleibt, tritt auch keine Änderung der Magnetfeldlinien bzw. ihrer Dichte ein. Wenn sich hingegen die Kugel 12 in eine andere Lage bewegt, weil auf dem Bewegungssensor 10 von außen her eine Bewegung einwirkt, ändert sich die Kraftliniendichte, und als Folge davon wird innerhalb des Hallelements 14 eine Spannung erzeugt.

Die soweitige Beschreibung des Bewegungssensors 10 verdeutlicht die wesentliche neue Funktion. Die Bewegung der Kugel 12 innerhalb des Gehäuses 20 wird nämlich nicht durch mechanische Kontakte registriert, sondern kontaktlos mit dem Hallelement 14 gemessen.

Die Masse der Kugel 12 konzentriert die Flußdichte der magnetischen Kraftlinien durch das Hallelement 14, und der magnetische Fluß bewirkt im Hallelement 14 das Auftreten der sogenannten Hall-Spannung. Ändert sich die Lage der Masse der Kugel 12, so ändert sich auch die Hall-Spannung, die - wie nachfolgend anhand von Fig. 3 noch näher erläutert wird - einem Verstärker zugeführt werden kann.

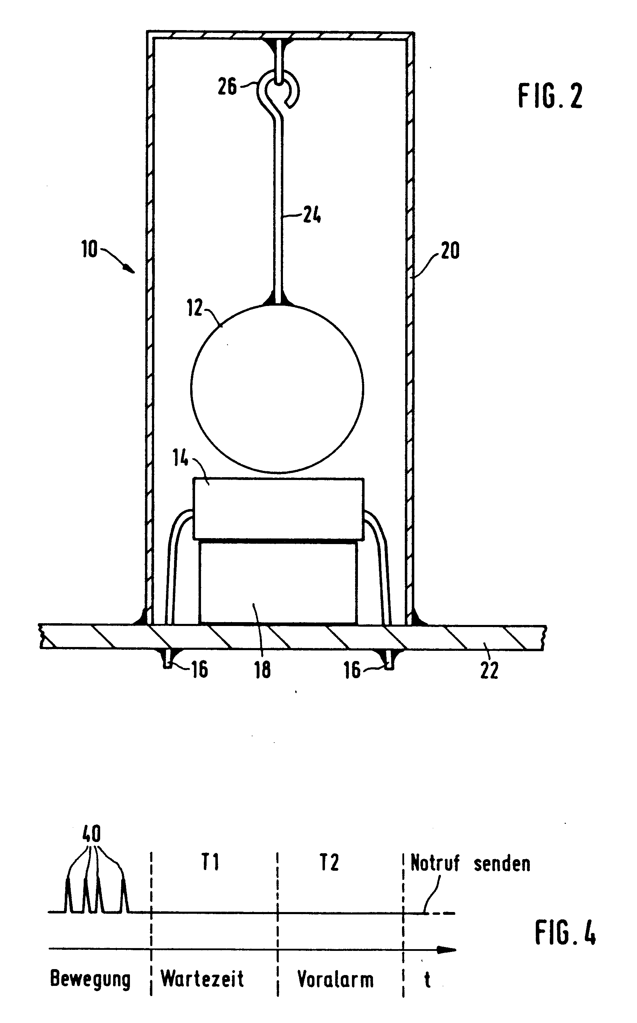

Bei der zweiten Ausführungsform eines Bewegungssensors 10 gemäß Fig. 2 ist die Kugel 12 über ein Pendel 24 an einem Haken 26 am oberen Ende des Gehäuses 20 aufgehängt und befindet sich im Abstand von dem Hallelement 14. Diese Anordnung führt zu einer besonders hohen Ansprechempfindlichkeit des Bewegungssensors 10, da sich die Kugel 12 schon bei geringsten Erschütterungen bewegt, wodurch in dem Hallelement 14 eine Spannung erzeugt wird. Die Ansprechempfindlichkeit läßt sich zusätzlich noch dadurch varrieren, daß der Abstand zwischen der Kugel 12 und dem Hallelement 14 verändert werden kann.

Sowohl bei dem Bewegungssensor 10 nach Fig. 1 als auch nach Fig. 2 ist das Gehäuse 20 jeweils rund bzw. zylindrisch ausgebildet. Solange sich der Bewegungssensor 10 daher in seiner gezeigten senkrechten Lage befindet, haben axiale Drehungen des Gehäuses 20 keinen Einfluß auf die Ansprechempfindlichkeit, da die Kugel 12 in jedem Fall auf die runde zylindrische Gehäusewandung treffen wird.

Wenn sich demgegenüber der Bewegungssensor 10 gemäß Fig. 2 in einer liegenden waagerechten Position befindet (beispielsweise wenn eine den Bewegungssensor tragende Person bewußtlos auf dem Boden liegt), besitzt der Bewegungssensor 10 eine geringere Ansprechempfindlichkeit, die hier auch bewußt gewählt und durchaus erwünscht ist.

Wie in Fig. 3 dargestellt ist, wird die von dem Hallelement 14 des Bewegungssensors 10 erzeugte Spannung in einem Verstärker 28 verstärkt, dessen Verstärkungsgrad mit Hilfe eines Widerstandes 30 einstellbar ist, wodurch sich die Empfindlichkeit variieren läßt.

Da es wegen der großen Empfindlichkeit unter Umständen zu Brummeinstreuungen kommen kann, werden diese durch einen dem Verstärker 28 nachgeschalteten Tiefpaß 32 unterdrückt, dessen Grenzfrequenz etwa bei 5 - 7 Hz liegt. Dem Tiefpaß 32 schließt sich eine Schaltstufe 34 an, in welcher die relativ langsamen Signale 40 (vgl. Fig. 4) zu steilflankigen Digitalsignalen geformt werden. Die Schaltstufe 34 ist mit einem stationären Lautsprecher 36 für die Erzeugung eines stationären Voralarms und mit einem Sender 38 zum Aussenden eines Notrufes verbunden.

Die Wirkungsweise der soweit beschriebenen Schaltungsanordnung ergibt sich aus der Darstellung gemäß Fig. 4. Dort sind längs die bei Bewegung auftretenden Signale 40 dargestellt. Das Zeitfenster T1 kennzeichnet eine Wartezeit innerhalb der Schaltstufe 34. Wenn innerhalb der Wartezeit von 10 - 60 Sekungen keine Signale 40 erzeugt werden, schließt sich an das Zeitfenster T1 ein weiteres Zeitfenster T2 an, und es wird jetzt über den Lautsprecher 36 ein stationärer Voralarm erzeugt.

Dieser Voralarm erinnert die den Bewegungssensor 10 tragende Person daran, daß bei weiterem Ausbleiben von Signalen 40 ein Notruf über den Sender 38 gesendet wird, und daß er sich daher bewegen muß, um beispielsweise einen Überwachungs-Rundgang fortzusetzen.

Wenn allerdings eine weitere Bewegung unterbleibt, wenn also das Zeitfenster T2 "Voralarm" ohne Auftreten von Signalen 40 verstreicht, wird automatisch über den Sender 38 ein Notruf abgesetzt.

Die obige Beschreibung verdeutlicht den vorteilhaften Einsatz des neuen Bewegungssensors im Bereich des Personenschutzes, obwohl selbstverständlich auch andere Ahwendungsfälle möglich sind.

Hervorzuheben ist als wesentliches Merkmal, daß das Erkennen einer Bewegung bei dem neuen Bewegungssensor 10 auf rein elektronischem Wege erfolgt, und daß daher auch mit einfachen Mitteln eine Einstellung der Empfindlichkeit gegeben ist. Diese Möglichkeit besteht bei den bekannten Bewegungssensoren mit normalenm Kugelschalter mit elektrischen bzw. mechanischen Kontakten nicht.

Eine weitere Beeinflussung der Empfindlichkeit besteht bei der Erfindung durch die Wahl der Gehäuseform. An Stelle der zylindrischen Form des Gehäuses 20 kann beispielsweise auch eine rechteckige Quaderform verwendet werden, wobei die Empfindlichkeit dann beispielsweise bei dem Bewegungssensor gemäß Fig. 1 davon abhängt, ob die Kugel 12 gegen eine ebene Seitenwand rollt oder bei einer Lageänderung des Bewegungssensors 10 in eine Ecke bewegt wird.

## Patentansprüche

1. Bewegungssensor zur Erzeugung eines oder mehrerer Signale bei auf einen bewegbar gelagerten Körper (12) einwirkender Bewegung, welche eine Änderung der Kraftlinien eines von einem Magneten (18) ausgehenden Magnetfeldes bewirkt, und mit einem auf Magnetfeldänderungen ansprechenden, als Hallelement ausgebildeten und zwischen dem bewegbar gelagerten Körper und dem Magneten angeordneten Detektor (14), dessen Signale von einer elektronischen Signalverarbeitungseinrichtung erfaßt werden, wobei der bewegbar gelagerte Körper (12), das Hallelement (14) und der Magnet (18) innerhalb eines allseitig geschlossenen Gehäuses angeordnet sind, **dadurch gekennzeichnet,** daß der Körper (12) durch eine im wesentlichen frei bewegliche Kugel gebildet ist, die aus einem magnetisierbaren Material besteht, und daß das Gehäuse (20) am Boden eine Platine (22) aufweist.

2. Bewegungssensor nach Anspruch 1, **dadurch gekennzeichnet,** daß sich der bewegbar gelagerte Körper (12) bei aufrechter Lage des Gehäuses (20) oberhalb des Hallelements (14) befindet.

3. Bewegungssensor nach Anspruch 1 und /oder 2, **dadurch gekennzeichnet,** daß das Hallelement (14) mit zwei nach außen führenden Anschlüssen (16) auf der Platine (22) befestigt ist.

4. Bewegungssensor nach einem der vorhergehenden Ansprüche 1 - 3, **dadurch gekennzeichnet,** daß der bewegbar gelagerte Körper (14) aufgehängt ist.

5. Bewegungssensor nach Anspruch 4, **dadurch gekennzeichnet,** daß der Abstand zwischen dem Körper (12) und dem Hallelement (14) veränderbar ist.

6. Bewegungssensor nach einem der vorhergehenden Ansprüche 1 - 5, dadurch gekennzeichnet, daß die am Hallelement (14) abgreifbare Spannung einem Verstärker (28) mit einstellbarer Verstärkung zugeführt ist.

7. Bewegungssensor nach Anspruch 6, dadurch gekennzeichnet, daß dem Verstärker (28) ein Tiefpaß (32) und eine Schaltstufe (34) nachgeschaltet sind, und daß der Ausgang der Schaltstufe (34) zu einem Sender (38) führt.

8. Bewegungssensor nach Anspruch 7, dadurch gekennzeichnet, daß die Grenzfrequenz des Tiefpaßes (32) bei 5 - 7 Hz liegt.

9. Bewegungssensor nach Anspruch 7, und/oder 8, dadurch gekennzeichnet, daß die Schaltstufe (34) unterschiedliche Zeitfenster (T1, T2) erzeugt und mit einem Voralarmgeber (36) verbunden ist.

10. Bewegungssensor nach Anspruch 9, dadurch gekennzeichnet, daß nach Ausbleiben von Signalen (40) des Hallelements (14) innerhalb der Zeitfenster (T1, T2) der Voralarmgeber (36) aktivierbar sind, um einen Voralarm zu erzeugen, oder die Aussendung eines Notrufs über den Sender (38) zu veranlassen.

11. Bewegungssensor nach Anspruch 1, dadurch gekennzeichnet, daß das Gehäuse (20) zylindrisch ausgebildet ist.

12. Bewegungssensor nach Anspruch 1, dadurch gekennzeichnet, daß das Gehäuse (20) quaderförmig ausgebildet ist.

## Claims

1. Movement sensor for generating one or more signals when a movement acts upon a movably mounted body (12), the movement causing a change in the lines of force of a magnetic field originating from a magnet (18), and comprising a detector (14), responding to magnetic field changes, constructed as a hall-effect element and disposed between the movably mounted body and the magnet, the signals from which detector are picked up by an electronic signal processing device, the movably mounted body (12), the hall-effect element (14) and the magnet (18) being disposed inside a fully enclosed casing, characterized in that the body (12) is formed of a substantially freely movable sphere, which is of a magnetizable material, and that the casing (20) possesses a plate (22) at the bottom.

2. Movement sensor according to Claim 1, characterized in that the movably mounted body (12), when the casing (20) is upright, is situated above the hall-effect element (14).

3. Movement sensor according to Claim 1 and/or 2, characterized in that the hall-effect element (14) is secured to the plate (22) by two outwardly leading terminals (16).

4. Movement sensor according to one of the preceding Claims 1 to 3, characterized in that the movably mounted body (14) is suspended.

5. Movement sensor according to Claim 4, characterized in that the distance between the body (12) and the hall-effect element (14) is variable.

6. Movement sensor according to one of the preceding Claims 1 to 5, characterized in that the voltage that can be tapped from the hall-effect element (14) is fed to an amplifier (28) having adjustable amplification.

7. Movement sensor according to Claim 6, characterized in that a low-pass filter (32) and a switching stage (34) are connected behind the amplifier (28), and that the output from the switching stage (34) leads to a transmitter (38).

8. Movement sensor according to Claim 7, characterized in that the limiting frequency of the low-pass filter (32) is 5 - 7 Hz.

9. Movement sensor according to Claim 7 and/or 8, characterized in that the switching stage (34) generates different time windows (T1, T2) and is connected to a pre-alarm emitter (36).

10. Movement sensor according to Claim 9, characterized in that, after non-occurrence of signals (40) from the hall-effect element (14) within the time windows (T1, T2), the pre-alarm emitter (36) can be activated in order to generate a pre-alarm, or to cause the transmission of an emergency call via the transmitter (38).

11. Movement sensor according to Claim 1, characterized in that the casing (20) is of cylindrical form.

12. Movement sensor according to Claim 1, characterized in that the casing (20) is of square or rectangular form.

## Revendications

1. Détecteur de mouvement destiné à produire un au plusieurs signaux par le mouvement affectant un corps (12) monté mobile, qui provoque une modification des lignes de forces d'un champ magnétique provenant d'un aimant (18), et avec un détecteur (14) répondant aux modifications de champ magnétique, formé par un élément à effet Hall et disposé entre le corps monté mobile et l'aimant, dont les signaux sont détectés par un dispositif de traitement électronique de signaux, le corps (12) monté mobile, l'élément à effet Hall et l'aimant (18) étant placés à l'intérieur d'une enceinte fermée de tous côtés, caractérisé en ce que le corps (12) est formé par une bille essentiellement libre de se mouvoir en un matériau magnétisable et en ce que l'enceinte (20) présente une platine (22) à sa base.

2. Détecteur de mouvement suivant la revendication 1, caractérisé en ce que le corps monté mobile (12) se trouve avec la position de l'enceinte (20) au-dessus de l'élément à effet Hall (14).

3. Détecteur de mouvement suivant la revendication 1 et/ou 2, caractérisé en ce que l'élément à effet Hall (14) est fixé à la platine (22) par deux connexions (16) vers l'extérieur.

4. Détecteur de mouvement suivant l'une des revendications précédentes 1 à 3, caractérisé en ce que le corps monté mobile (14) est suspendu.

5. Détecteur de mouvement suivant la revendication 4, caractérisé en ce que la distance entre le corps (12) et l'élément à effet Hall (14) peut être modifiée.

6. Détecteur de mouvement suivant l'une des revendications précédentes 1 à 5, caractérisé en ce que la tension que l'on peut prélever sur l'élément à effet Hall (14) est appliquée à un amplificateur (28) avec un gain réglable.

7. Détecteur de mouvement suivant la revendication 6, caractérisé en ce qu'à l'amplificateur (28) sont reliés en série un filtre passe-bas (32) et un étage de commutation (34) et en ce que la sortie de l'étage de commutation (34) est relié à un émetteur (38).

8. Détecteur de mouvement suivant la revendication 7, caractérisé en ce que la limite de fréquence du filtre passe-bas (32) se trouve vers 5 à 7 Hz.

9. Détecteur de mouvement suivant la revendication 7 et/ou 8, caractérisé en ce que l'étage de commutation (34) crée des fenêtres de temps différentes (T1, T2) et est relié à un appareil transmetteur de préalarme (36).

10. Détecteur de mouvement suivant la revendication 9, caractérisé en ce qu'après des ratés de signaux (40) de l'élément à effet Hall (40), à l'intérieur des fenêtres de temps (T1, T2) l'appareil transmetteur de préalarme (36) peut être activé, pour produire une préalarme, ou pour donner lieu à l'émission d'un appel de détresse par l'émetteur.

11. Détecteur de mouvement suivant la revendication 1, caractérisé en ce que l'enceinte (20) est de forme cylindrique.

12. Détecteur de mouvement suivant la revendication 1, caractérisé en ce que l'enceinte (20) est de forme parallélipipédique.
